# EUROPEAN PATENT SPECIFICATION

(11) **EP 3 441 261 B1**
(45) Date of publication and mention of the grant of the patent: **26.02.2020**
(21) Application number: 17185390.6
(22) Date of filing: 08.08.2017
(51) Int. Cl.: B60Q 1/00, B60Q 1/076, F21S 41/60, B60Q 1/068, F21S 41/675

(54) **LIGHTING DEVICE FOR VEHICLES PROVIDED WITH ROTATING MODULES**
BELEUCHTUNGSVORRICHTUNG FÜR FAHRZEUGE MIT ROTIERENDEN MODULEN
DISPOSITIF D'ÉCLAIRAGE POUR VÉHICULES POURVUS DE MODULES ROTATIFS

(43) Date of publication of application: 13.02.2019
(73) Proprietor: Automotive Lighting Italia S.p.A., 10078 Venaria Reale (Torino) (IT); PSA Automobiles SA, 78300 Poissy (FR)
(72) Inventor: GONCALVES, Whilk Marcelino, 78300 Poissy (FR); LE DALL, Christophe, 78300 Poissy (FR); BORE, Michael, 78300 Poissy (FR); ZATTONI, Sergio, 10078 Venaria Reale (IT); RODRIGUEZ ORTEGA, Pablo, 10078 Venaria Reale (IT); MUSCATO, Massimo, 10078 Venaria Reale (IT)
(74) Representative: Plebani, Rinaldo

(56) References cited:
- EP-A1- 2 803 528
- EP-A1- 3 176 493
- WO-A1-2016/083689
- CN-A- 106 500 028
- DE-A1-102008 028 797
- DE-A1-102011 017 538

## Description

### Technical field of the invention

The present invention relates to a lighting device equipped with a main lighting module, and with a plurality (i.e. at least two) of secondary lighting modules having rotation capabilities in order to provide selectively a plurality of lighting distributions by means of the same lighting device.

### Technical Background

Lighting devices for vehicles provided with rotating elements, like a rotating reflector, are known in the art.

EP2902701 and FR3022322A1 disclose a lighting module having a fixed light source consisting of a LED and a rotating support having two opposite faces, one constituting a reflector and the other realizing a second function, e.g. an aspect function; a fixed motor rotates the support with respect to the fixed light source in order to bring selectively the two faces on the front side of the device facing toward the direction of motion of the vehicle.

Lighting devices for vehicles comprising a plurality of individual lighting modules, some of which are provided with rotating elements, like e.g. a rotating reflector, are known in the art, see for instance WO 2016/083689 A1 or CN 106 500 028 A.

Vehicle lighting devices, such as headlamps, equipped with a plurality of rotating lighting modules are generally difficult and expensive to assemble. Moreover, they are likewise difficult to adjust, in order to ensure that, on one side, all the rotating lighting modules are synchronized to each other and all oriented correctly with reference to the main module and, on the other side, that all the modules, i.e. both the main module and the rotating secondary modules, are oriented properly in the vertical plane in order to avoid dazzling when the vehicle crosses other vehicles.

### Summary of the invention

The object of the present invention is to provide a lighting device for vehicles comprising a main lighting module and a plurality, i.e. at least two, of secondary lighting modules with rotating capabilities, able to carry out a plurality of lighting function though being of simple and compact construction, cost-effective and easily adjustable during the assembly operations.

According to the invention, therefore, a lighting device for vehicles is provided having the features set out in the appended claims.

### Brief description of the drawings

Further features and advantages of the present invention will become more apparent from the following description of one non-limiting embodiment thereof, made with reference to the figures in the accompanying drawings, in which:
- figure 1 shows schematically a three-quarter front perspective view of a lighting device for vehicles realized according to the present invention, including one main lighting module and a plurality of secondary lighting modules;
- figure 2 shows schematically and in an enlarged scale a three-quarter front perspective view of one secondary lighting module of the lighting device of figure 1;
- figure 3 shows a three-quarter front perspective view taken from the above of the main lighting module, with parts thereof cut away for sake of simplicity, and of all the secondary lighting modules of the lighting device of figure 1 arranged as they are mounted relative to each other inside the lighting device of figure 1 and of their operating and adjusting mechanisms;
- figure 4 shows in an enlarged scale a detail of one of the secondary lighting modules of figure 3;
- figure 5 shows a three-quarter rear perspective view taken from the above of all the lighting modules of figure 3 and of their operating and adjusting mechanisms, still with part of the main lighting module taken away;
- figure 6 shows in a further enlarges scale a three-quarter front perspective view taken from the above of the main lighting module viewed in its entirety and of an adjusting device thereof; and
- figure 7 shows a detail of an adjusting device of the secondary lighting modules.

### Detailed description

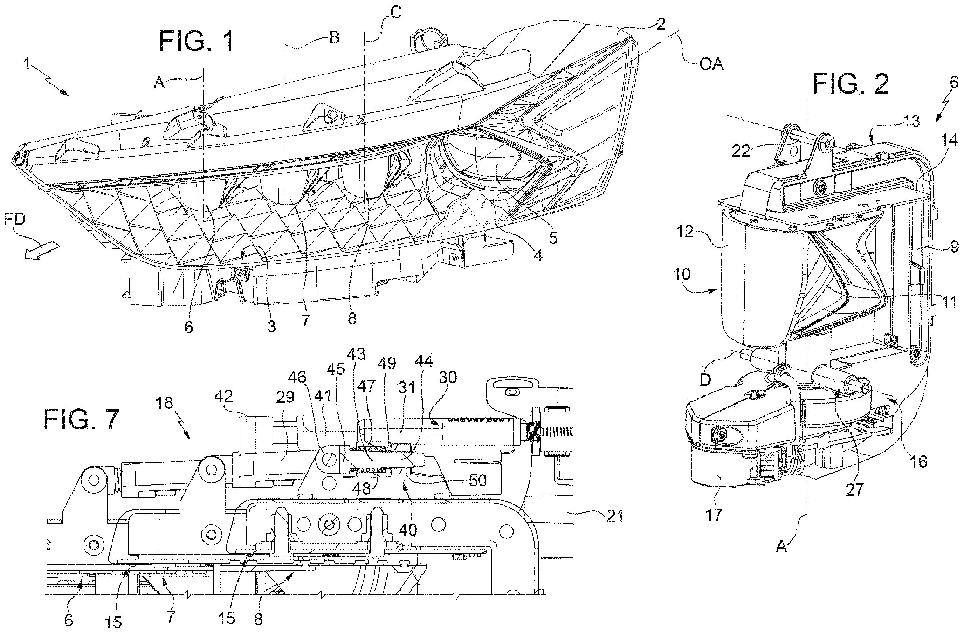

With reference to figure 1, reference number 1 indicates as a whole a lighting device consisting, in the non-limiting embodiment shown, in a vehicle headlight assembly, which is only schematically shown from the front.

The lighting device 1 comprises a generally cup-shaped housing body 2 designed to be mounted on a vehicle, known and not shown for sake of simplicity. Housing body 2 is made of synthetic plastic material by injection molding and has a front inlet opening 3 in use facing opposite to the vehicle and towards a forward driving direction FD of the vehicle, indicated by an arrow; the front inlet opening 3 is closed by a transparent cover 4, normally constituted by a terse lens (i.e. a transparent lens not provided with optical functions).

According to one aspect of the present invention, the housing body 2 carries at the interior thereof at least one main lighting module 5 and at least two, and preferably three or more, in the embodiment shown three, secondary (or auxiliary) lighting modules 6, 7 and 8, arranged side by side to one another; the lighting modules 6-8 are moreover arranged all on a same side of the main lighting module 5; all the modules 5-8 may be visible from the outside through the transparent cover 4.

The housing body 2 is designed to be mounted in a known manner on a vehicle (not shown) with the front inlet opening 3 arranged to face in use toward the forward driving direction FD of the vehicle; the main lighting module 5 and the at least two (three in the embodiment shown) secondary lighting modules 6,7,8 are arranged inside the housing body 2, facing the inlet opening.

The main lighting module 5 is designed to be carried normally in a stationary manner within the housing body 2.

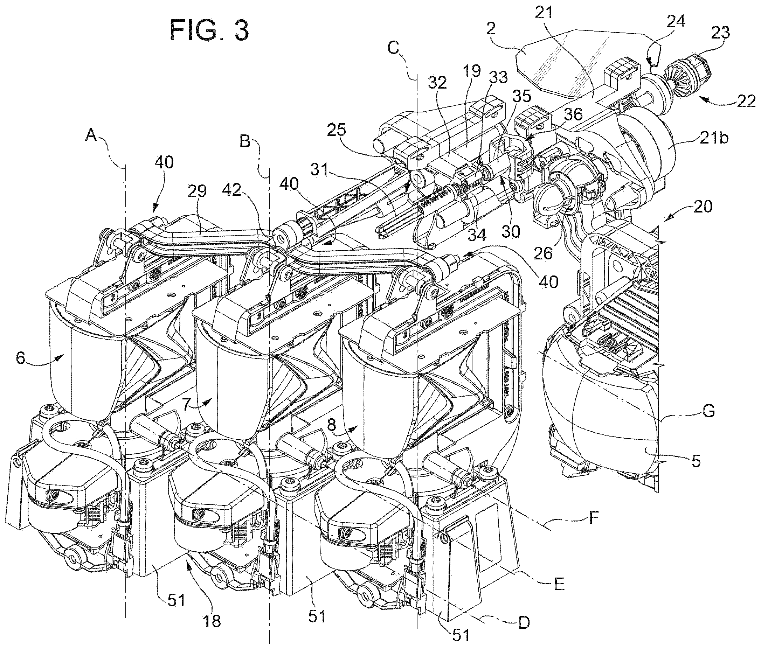

The secondary lighting modules 6,7,8 are carried within the housing body 2 rotatable in relation to the housing body 2 itself and to the main lighting module 5, each around a respective its own first axis, each indicated in figures 1 and 3 with a different reference letter "A", "B" and "C".

The first axes A,B,C of the secondary lighting modules 6,7,8 are arranged parallel to each other and transverse to a plane which, in a mounting position of the lighting device 1, is an horizontal plane and contains respective optical axes of the lighting devices 5,6,7,8; for sake of simplicity in figure 1 is shown the optical axis OA of the stationary lighting module 5 only, which is arranged parallel to the direction FD. The optical axes of the lighting modules 6,7,8 may be arranged parallel to the optical axis OA or at an angle thereto, by rotating one at a time or all together the secondary lighting modules 6-8 around the respective axes A,B,C.

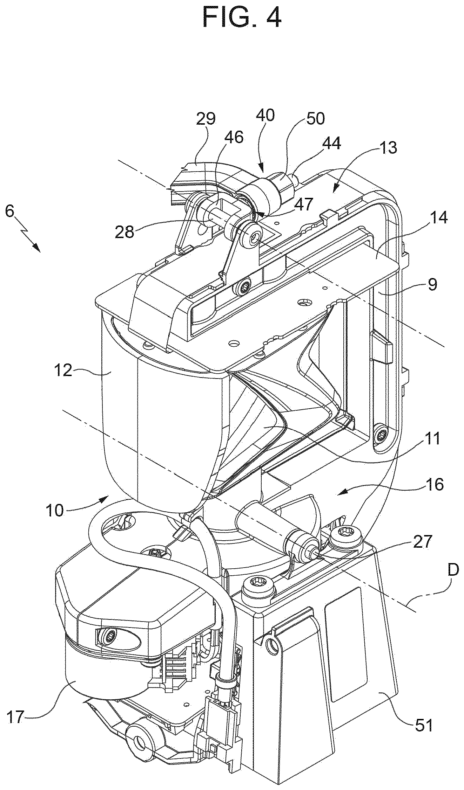

With reference to figures 2 and 4, all the rotating lighting module 6,7,8 are identical to each other and include the same components. In figure 2 it is shown shows for sake of simplicity the lighting module 6 only, but what described with reference to lighting module 6 also apply to lighting modules 7 and 8. Such a lighting module is for instance described in EP 3 176 493 A1.

Each lighting modules 6-8 therefore comprises a rigid, C-shaped framed support 9 carrying in a rotatable manner around the respective first axis, namely around axis A in figure 2, a rotating optical unit 10 comprising a reflector 11 and a lens 12 connected rigid together, facing each other. The framed support 9 also bears at an upper end 13 thereof, defining the upper end of the whole lighting module 6, a printed circuit board 14 carrying in known manner at least one light source 15 (figure 7), and preferably a plurality of light sources, preferably all constituted by LEDs; the LED light source 15 and the eventual other LED light sources are known and not shown in details for sake of simplicity.

The framed support 9 also caries at a lower end 16 thereof, also constituting the lower end of each secondary lighting module 6-8, an actuator 17 constituted by an electric motor to rotate the optical unit 10 of each module 6,7,8 relative to the respective light source 15 around the first axis of each module A, B, C.

According to one feature of the invention, the secondary lighting modules 6-8 and the main lighting module 5 are constrained to the housing body 2 so as to be rotatable in relation to the housing body 2 around second axes arranged parallel to the horizontal plane.

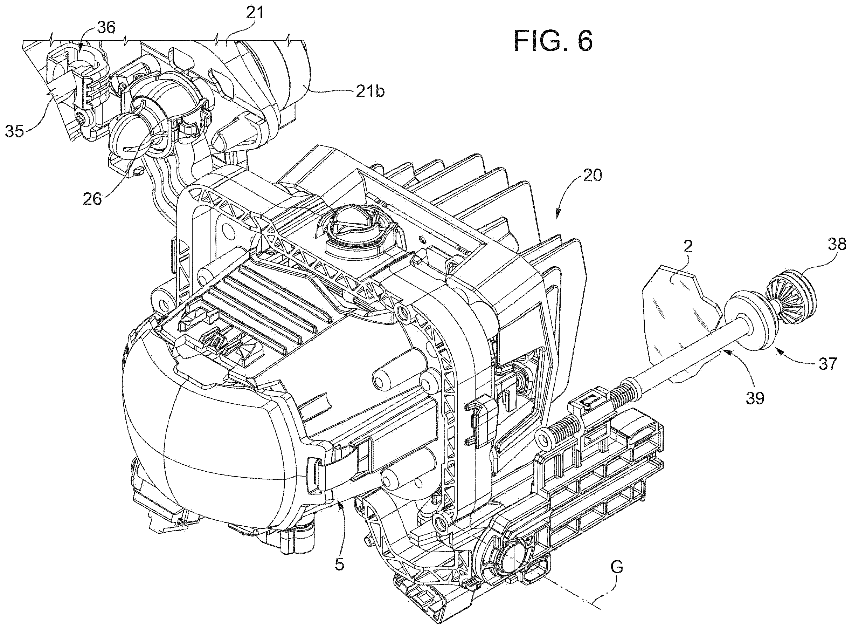

The second axes of the secondary lighting modules 6-8 are indicated in figure 3 with the reference letters "D", "E" and "F", for the lighting modules 6, 7 and 8 respectively; the second axis of the main lighting module 5 is indicated with the reference letter "G" and it is shown in figure 3 and, better, in figure 6.

The rotation around the axes D-G has the object to correct in use the vertical position of the light beams generated by the lighting device 1 both in order to compensate the variations in loads of the vehicle and, as it will be seen, to automatically compensate for the asperity of the terrain in order to avoid to dazzle other incoming vehicles and to generate specific light distributions in order to improve the lighting performances of the lighting device 1.

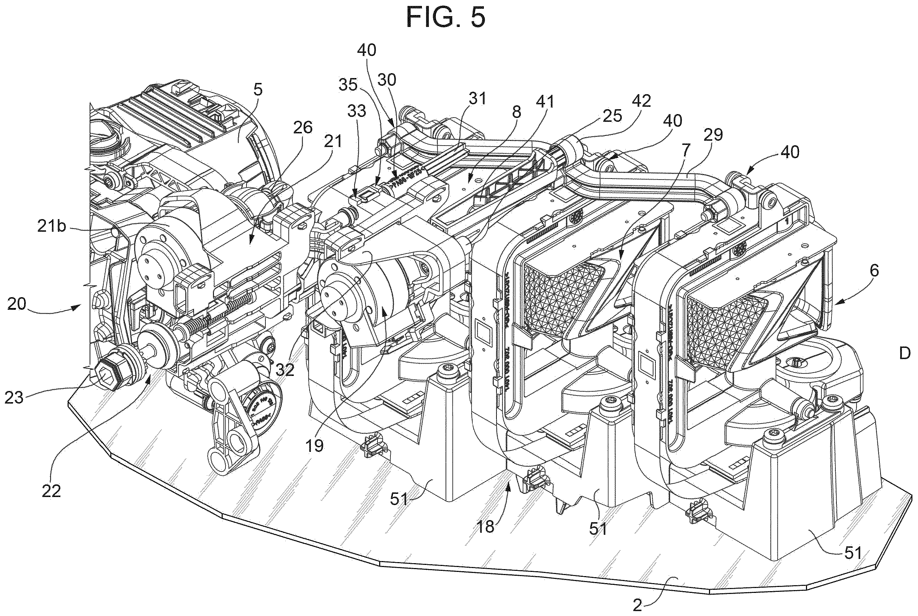

According to a first aspect of the invention, the secondary lighting modules 6-8 are mechanically connected together to form within the housing body 2 a first sub-assembly 18 comprising the secondary lighting modules 6-8 and a first motorized actuator 19 (figures 3 and 5) configured to rotate all the secondary lighting modules 6-8 together, i.e. simultaneously at the same time, around the respective second axes D-F.

In combination with the above, the main lighting module 5 is configured to form within the housing body 2 a second sub-assembly comprising, other than the lighting module 5, a second motorized actuator 21b configured to rotate the main lighting module 5 around its respective second axis G independently of the first motor actuator 19 and of the secondary lighting modules 6,7 and 8.

Moreover, according to a further feature of the invention, the first and second sub-assembly 18,20 are mechanically connected to a common operational element 21 arranged inside the housing body 2 above and behind the lighting modules 5-8, so as to be axially movable in relation to the housing body 2 under the thrust and action of a first manual adjusting device 22 provided within the housing body 2.

The first manual adjusting device 22 has a first control element 23, in the embodiment shown an hexagonal gripping handle, crossing in a fluid tight manner (not shown for sake of simplicity) the rear wall of the housing body 2 through a respective first hole 24 thereof, to project outside the housing body 2 opposite to the inlet opening 3.

The first manual adjusting device 22 is configured to rotate of the same angle the main lighting module 5 and all the secondary lighting modules 6-8, the latter together, i.e. simultaneously, with the lighting module 5, around the second axes G and D-F thereof.

In the embodiment shown, the first and second motorized actuators 19,21b consist of electric motors having output shafts 25 and 26 respectively, arranged to slide axially relative to the housing body 2 in a direction parallel to the optical axis OA of the main lighting module 5.

Moreover, each secondary lighting module 6-8 comprises (figures 2 and 4) a first hinge 27 and a second hinge 28, both provided integral with the framed support 9; the first hinge 27 is arranged at the lower end 16 of the secondary lighting module 6-8 and defines the respective second axis D-F; the second hinge 28 is arranged at the upper end 13 of each secondary lighting module 6-8, parallel to the first hinge 27.

According to the invention, the first sub-assembly 18 also comprises a drag link rod 29 connecting the secondary lighting modules 6-8 to one another; the drag link rod 29 is arranged within the housing body 2 running above all the secondary lighting modules 6-8 and is connected, in the manner that will be described in details herein below, to the second hinge 28 of all the secondary lighting modules 6-8.

The first sub-assembly 18 further comprises a second manual adjusting device 30 arranged within the housing body 2 and having a second control element 31 thereof (a star-shaped handle) facing the front inlet opening 3.

The second manual adjusting device 30 is configured to axially move the first motorized actuator 19 relative to the housing body 2 to make the secondary lighting modules 6-8 to rotate all together, i.e. simultaneously, around the respective second axes D-F relative to the main lighting module 5.

At this purpose, the first motorized actuator 19 is carried by a first support element 32 provided in a through manner with a threaded seat 33 (figure 3).

Moreover, the second manual adjusting device 30 consists of the threaded seat 33 and of a threaded rod 34 engaging in a through manner the threaded seat 33.

The threaded rod 34 has a first end constituted by the control element 31, which is therefore carried integral to the first end of the threaded rod 34, angularly rigid therewith, and a second end 35 mechanically linked to the common operational element 21 to which the first and second sub-assembly 18,20 are both connected.

In particular, the second end 35 is linked to the common element 21 by means of a ball joint 36. In this manner, the second manual adjusting device 30 is constrained by means of the ball joint 36 to the common element 21 to which the first and second sub-assembly 18,20 are both connected and which indirectly bears the motorized actuator 19 via the rod 34, seat 33 and support element 32.

Accordingly, the second manual adjusting device 30 connects, via the ball joint 36 and the first support element 32, the first motorized actuator 19 to the common element 21, as described above.

The second sub-assembly 20 comprises a third manual adjusting device 37 of generally known type and therefore not described in details for sake of simplicity; the manual adjusting device 37 is provided within the housing body 2 and has a third control element 38, in the embodiment shown an hexagonal gripping handle, crossing in a fluid tight manner (not shown for sake of simplicity) the rear wall of the housing body 2 through a respective second hole 39 thereof, to project outside the housing body 2 opposite to the inlet opening 3.

According to one feature of the invention, the third manual adjusting device 37 is configured to rotate the main lighting module 5 around the second axis G thereof independently of the secondary lighting modules 6-8.

According to a further feature of the invention, the drag link rod 29 is connected to the second hinge 28 of all the secondary lighting modules 6-8 via a respective fourth manual adjusting device 40 for each lighting module 6-8.

Each manual adjusting device 40 is configured to rotate the respective secondary module 6-8 around its respective second axis D-F relative to the drag link rod 29, independently of the other secondary lighting modules 6-8.

Moreover, the drag link rod 29 is connected axially rigid with the first motor actuator 19 to be moved thereby relative to the housing body 2 and the main lighting module 5 via a connecting rod 41. The connecting rod 41 is arranged above the drag link rod 29 and is connected thereto via a joint 42.

Each fourth manual adjusting device 40 comprises (figures 7 and 4) a pin 43 having a threaded first end 44 and a second end 45 provided with a fork-shaped lug 46 rotationally linked to the second hinge 28 of the respective secondary lighting module 6-8.

Each adjusting device 40 further comprises a cup-shaped through seat 47 provided transversally within the drag link rod 29 at the second hinge 28 of each secondary lighting module 6-8. Each cup-shaped through seat 47 is engaged by the pin 43 on the side of the first end 44 thereof. Each adjusting device 40 also comprises a spiral spring 48 fitted onto the pin 43, on the side of the first end 44 thereof and arranged within the respective cup-shaped seat 47 of the drag link rod 29, packed between a bottom wall of the cup-shaped through seat 47 (figure 7) and the second end 45 of the pin 43.

Finally, each adjusting device 40 also comprises a nut 50 screwed onto the first end 44 of the pin 43 and cooperating against the drag link rod 29 on the side opposite to the respective cup-shaped through seat 47 thereof to pull the pin 43 against the action of the spiral spring 48.

In this manner, each secondary lighting module 6-8 can be rotated around the respective axis D-F without moving the drag link rod 29 and therefore independently of the other secondary lighting modules 6-8.

In order to let the sub-unit 18 to be pre-mounted before inserting it within the housing body 2, the secondary lighting modules 6-8 are carried, either individually or all together, by a single rigid base element 51 configured to receive all the lighting modules 6-8 or by a plurality of identical rigid base elements 51 configured to receive one single secondary lighting module 6-8.

In both cases, each secondary lighting module 6-8 is hinged to the respective or common base element 51 at the respective second axis D-F by means of the hinge 27.

In both cases, the respective or common rigid base element 51 is configured to provide a support for the first sub-assembly 18 and to provide a mounting interface between the housing body 2 and the first sub-assembly 18.

Owing to the described arrangements, it is possible to pre-assemble the sub-assembly 18 by linking each lighting module 6-8 to a base element 51 and to the drag link rod 29; after assembly, the angular position of each lighting module 6-8 relative to the respective second axis D-F is adjusted by means of the device 40, acting on the nuts 50.

Then the pre-assembly is completed by linking the drag link rod to the connecting rod 41 and to the actuator 19, via the threaded rod 34 and the support element 32; finally the sub-assembly 18 is inserted within the housing body 2 with the sub-assembly 20 already arranged therein and is connected to the common operational element by means of the ball joint 36.

At this point the angular position of all the lighting modules 6-8 relative to the main lighting module 5 is adjusted by means of device 30. Finally, the lighting device can be tested and the angular position of all the lighting modules 5-8 is adjusted by means of device 22.

In the end, an extremely compact and effective arrangement is obtained which is easy to be assembled and above all, to be very finely tuned.

All the aims of the invention are therefore accomplished.

## Claims

1. A lighting device (1) for vehicles, comprising an housing body (2) designed to be mounted on a vehicle and having a front inlet opening (3) arranged to face in use toward a forward driving direction of the vehicle, a transparent cover (4) to close the front inlet opening, a main lighting module (5) and at least two secondary lighting modules (6,7,8), the main lighting module and the at least two secondary lighting modules being arranged inside the housing body (2), side by side, facing the inlet opening, the at least two secondary lighting modules (6,7,8) being carried within the housing body (2) rotatable in relation to the housing body and to the main lighting module, around respective first axes (A,B,C) arranged parallel to each other and transverse to an horizontal plane; and wherein the secondary lighting modules and the main lighting module are constrained to the housing body (2) so as to be rotatable in relation to the housing body around second axes (D,E,F,G) arranged parallel to the horizontal plane; wherein, in combination:
i)- the secondary lighting modules (6-8) are mechanically connected together to form within the housing body a first sub-assembly (18) comprising a first motorized actuator (19) configured to rotate all the secondary lighting modules (6-8) together around the respective second axes;
ii) the main lighting module (5) is configured to form within the housing body a second sub-assembly (20) comprising a second motorized actuator (21b) configured to rotate the main lighting module around its respective second axis independently of the first motor actuator (19) and of the secondary lighting modules (6-8); **characterized in that**
iii) the first and second sub-assembly (18,20) are mechanically connected to a common element (21) axially movable in relation to the housing body (2) under the thrust of a first manual adjusting device (22) provided within the housing body and having a first control element (23) passing through the housing body to project outside the housing body opposite to the inlet opening (3); the first adjusting device (22) being configured to rotate of the same angle the main and secondary lighting modules (5-8), all together, around the second axes (D-G) .

2. A lighting device according to claim 1, **characterized in that** the first sub-assembly (18) comprises a second manual adjusting device (30) arranged within the housing body and having a second control element (31) thereof facing the front inlet opening (3), the second manual adjusting device being configured to axially move the first motorized actuator (19) relative to the housing body (2) to make the secondary lighting modules (6-8) to rotate all together around the respective second axes (D-F) relative to the main lighting module (5); the second manual adjusting device (30) being constrained by means of a ball joint (36) to the common element (21) to which the first and second sub-assembly (18,20) are both connected.

3. A lighting device according to claim 2, **characterized in that** the second manual adjusting device (30) consists of a threaded rod (34) engaging a threaded seat (33) provided through a first support element (32) carrying the first motorized actuator (19); the threaded rod (34) having a first end carrying the second control element (31) angularly rigid thereto and a second (35) end linked to said common element (21) to which the first and second sub-assembly (18,20) are both connected via said ball joint (36), so as to connect to the common element (21) also the first motorized actuator (19) via said fist support element (32).

4. A lighting device according to anyone of the preceding claims, **characterized in that** the second sub-assembly (20) comprises a third manual adjusting device (37) provided within the housing body and having a third control element (38) passing through the housing body to project outside the housing body (2) opposite to the inlet opening; the third manual adjusting device (37) being configured to rotate the main lighting module (5) around the second axis (G) thereof independently of the secondary lighting modules (6-8) .

5. A lighting device according to anyone of the preceding claims, **characterized in that** each secondary lighting module (6-8) comprises a first and a second hinge (27,28); the first hinge (27) being arranged at a lower end (16) of the secondary lighting module and defining the respective second axis; and the second hinge (28) being arranged at a upper end (13) of the secondary lighting module, parallel to the first hinge (27); the first sub-assembly (18) further comprising a drag link rod (29) to connect together all the secondary lighting modules (6-8); the drag link rod (29) running above all the secondary lighting modules and being connected to the second hinge (28) of all the secondary lighting modules via a respective fourth manual adjusting device (40) configured to rotate the respective secondary module around its respective second axis relative to the drag link rod (29) and independently of the other secondary lighting devices; the drag link rod (29) being connected axially rigid with the first motor actuator (19) to be moved thereby relative to the housing body (2) and the main lighting module (5).

6. A lighting device according to claim 5, **characterized in that** each fourth manual adjusting device (40) comprises: a pin (43) having a threaded first end (44) and a second end (45) provided with a lug (46) rotationally linked to the second hinge (28) of a respective secondary lighting module; a cup-shaped through seat (47) provided transversally within the drag link rod (29) at the second hinge (28) of each secondary lighting module (6-8), the cup-shaped through seat (47) being engaged by said pin (43) on the side of the first end (44) thereof; a spiral spring (48) fitted onto the pin, on the side of the first end thereof and arranged within the respective cup-shaped seat (47) of the drag link rod, packed between a bottom wall (49) of the cup-shaped through seat and the second end (45) of the pin; and a nut (50) screwed onto the first end of said pin and cooperating against the drag link rod (29) on the side opposite to the respective cup-shaped through seat (47) thereof to pull the pin (43) against the action of the spiral spring (48).

7. A lighting device according to anyone of the preceding claims, **characterized in that** the secondary lighting modules (6-8) are carried, either individually or all together, by one or more rigid base element/s (51) to which each secondary lighting module is hinged at the respective second axis (D-F); the rigid base element/s (51) being configured to provide a support for the first sub-assembly (18) and to provide a mounting interface between the housing body (2) and the first sub-assembly (18).

8. A lighting device according to anyone of the preceding claims, **characterized in that** said first and second motorized actuators (19,21b) consist of an electric motors having an output shaft (25,26) sliding axially relative to the housing body in a direction parallel to an optical axis (OA) of the main lighting module (5).

9. Vehicle provided with a lighting device (1) according to anyone of the preceding claims.

## Patentansprüche

1. Beleuchtungsvorrichtung (1) für Fahrzeuge, umfassend einen Gehäusekörper (2), der zur Montage an einem Fahrzeug ausgebildet ist und eine vordere Einlassöffnung (3) aufweist, die so angeordnet ist, dass sie im Gebrauch in eine Vorwärtsfahrtrichtung des Fahrzeugs weist, eine transparente Abdeckung (4) zum Verschließen der vorderen Einlassöffnung, ein Hauptbeleuchtungsmodul (5) und wenigstens zwei sekundäre Beleuchtungsmodule (6, 7, 8), wobei das Hauptbeleuchtungsmodul und die wenigstens zwei sekundären Beleuchtungsmodule der Einlassöffnung zugewandt nebeneinander innerhalb des Gehäusekörpers (2) angeordnet sind, wobei die wenigstens zwei sekundären Beleuchtungsmodule (6, 7, 8) innerhalb des Gehäusekörpers (2) relativ zu dem Gehäusekörper und zu dem Hauptbeleuchtungsmodul um jeweils erste Achsen (A, B, C) drehbar gelagert sind, die parallel zueinander und quer zu einer horizontalen Ebene angeordnet sind; und wobei die sekundären Beleuchtungsmodule und das Hauptbeleuchtungsmodul an dem Gehäusekörper (2) so befestigt sind, dass sie relativ zu dem Gehäusekörper um zweite Achsen (D, E, F, G), die parallel zu der horizontalen Ebene angeordnet sind, drehbar sind; wobei in Kombination:
i) die sekundären Beleuchtungsmodule (6-8) mechanisch miteinander verbunden sind, um innerhalb des Gehäusekörpers eine erste Unterbaugruppe (18) zu bilden, die ein erstes motorisiertes Stellglied (19) umfasst, das dafür konfiguriert ist, alle sekundären Beleuchtungsmodule (6-8) zugleich um die jeweiligen zweiten Achsen zu drehen;
ii) das Hauptbeleuchtungsmodul (5) dafür konfiguriert ist, innerhalb des Gehäusekörpers eine zweite Unterbaugruppe (20) zu bilden, die ein zweites motorisiertes Stellglied (21b) umfasst, das dafür konfiguriert ist, das Hauptbeleuchtungsmodul unabhängig von dem ersten motorisierten Stellglied (19) und von den sekundären Beleuchtungsmodulen (6-8) um seine entsprechende zweite Achse zu drehen; **dadurch gekennzeichnet, dass**
iii) die erste und die zweite Unterbaugruppe (18, 20) mechanisch mit einem gemeinsamen Element (21) verbunden sind, das relativ zu dem Gehäusekörper (2) unter der Schubkraft einer ersten manuellen Einstellvorrichtung (22) axial beweglich ist, die innerhalb des Gehäusekörpers vorgesehen ist und ein erstes Steuerelement (23) aufweist, das durch den Gehäusekörper hindurchgeht, um aus dem Gehäusekörper gegenüber der Einlassöffnung (3) hervorzustehen; wobei die erste Einstellvorrichtung (22) dafür konfiguriert ist, das Hauptbeleuchtungsmodul und die sekundären Beleuchtungsmodule (5-8) zugleich um die zweiten Achsen (D-G) um den gleichen Winkel zu drehen.

2. Beleuchtungsvorrichtung nach Anspruch 1, **dadurch gekennzeichnet, dass** die erste Unterbaugruppe (18) eine zweite manuelle Einstellvorrichtung (30) umfasst, die innerhalb des Gehäusekörpers angeordnet ist und ein zweites Steuerelement (31) aufweist, das der vorderen Einlassöffnung (3) zugewandt ist, wobei die zweite manuelle Einstellvorrichtung dafür konfiguriert ist, das erste motorisierte Stellglied (19) relativ zu dem Gehäusekörper (2) axial zu bewegen, um die sekundären Beleuchtungsmodule (6-8) zugleich um die jeweiligen zweiten Achsen (D-F) relativ zu dem Hauptbeleuchtungsmodul (5) zu drehen; wobei die zweite manuelle Einstellvorrichtung (30) mittels eines Kugelgelenks (36) an dem gemeinsamen Element (21) befestigt ist, mit dem sowohl die erste als auch die zweite Unterbaugruppe (18, 20) verbunden sind.

3. Beleuchtungsvorrichtung nach Anspruch 2, **dadurch gekennzeichnet, dass** die zweite manuelle Einstellvorrichtung (30) eine Gewindestange (34) umfasst, die mit einem Gewindesitz (33) in Eingriff ist, der sich durch ein erstes Unterstützungselement (32) erstreckt, das das erste motorisierte Stellglied (19) trägt; wobei die Gewindestange (34) ein erstes Ende, das das zweite Steuerelement (31) trägt, das zu diesem winkelmäßig starr ist, und ein zweites Ende (35) aufweist, das mit dem gemeinsamen Element (21) verbunden ist, mit dem sowohl die erste als auch die zweite Untergruppe (18, 20) über das Kugelgelenk (36) verbunden sind, um über das erste Unterstützungselement (32) auch das erste motorisierte Stellglied (19) mit dem gemeinsamen Element (21) zu verbinden.

4. Beleuchtungsvorrichtung nach einem der vorangehenden Ansprüche, **dadurch gekennzeichnet, dass** die zweite Unterbaugruppe (20) eine dritte manuelle Einstellvorrichtung (37) umfasst, die innerhalb des Gehäusekörpers vorgesehen ist und ein drittes Steuerelement (38) aufweist, das sich durch den Gehäusekörper erstreckt, um aus dem Gehäusekörper (2) gegenüber der Einlassöffnung hervorzustehen; wobei die dritte manuelle Einstellvorrichtung (37) dafür konfiguriert ist, das Hauptbeleuchtungsmodul (5) unabhängig von den sekundären Beleuchtungsmodulen (6-8) um seine zweite Achse (G) zu drehen.

5. Beleuchtungsvorrichtung nach einem der vorangehenden Ansprüche, **dadurch gekennzeichnet, dass** jedes sekundäre Beleuchtungsmodul (6-8) ein erstes und ein zweites Gelenk (27, 28) umfasst; wobei das erste Gelenk (27) an einem unteren Ende (16) des sekundären Beleuchtungsmoduls angeordnet ist und die jeweilige zweite Achse definiert; und das zweite Gelenk (28) an einem oberen Ende (13) des sekundären Beleuchtungsmoduls parallel zu dem ersten Gelenk (27) angeordnet ist; wobei die erste Unterbaugruppe (18) ferner eine Schlepplenkstange (29) zum Verbinden aller sekundären Beleuchtungsmodule (6-8) umfasst; wobei die Schlepplenkstange (29) oberhalb aller sekundären Beleuchtungsmodule verläuft und mit dem zweiten Gelenk (28) aller sekundären Beleuchtungsmodule über eine entsprechende vierte manuelle Einstellvorrichtung (40) verbunden ist, die dafür konfiguriert ist, das jeweilige sekundäre Modul relativ zu der Schlepplenkstange (29) und unabhängig von den anderen sekundären Beleuchtungsmodulen um seine jeweilige zweite Achse zu drehen; wobei die Schlepplenkstange (29) axial starr mit dem ersten Motorstellglied (19) verbunden ist, um somit relativ zu dem Gehäusekörper (2) und dem Hauptbeleuchtungsmodul (5) bewegt zu werden.

6. Beleuchtungsvorrichtung nach Anspruch 5, **dadurch gekennzeichnet, dass** jede der vierten manuellen Einstellvorrichtungen (40) umfasst: einen Stift (43), der ein mit Gewinde versehenes erstes Ende (44) und ein zweites Ende (45), das mit einer Öse (46) versehen ist, die drehbar mit dem zweiten Gelenk (28) eines entsprechenden sekundären Beleuchtungsmoduls verbunden ist, aufweist; einen becherförmigen durchgehenden Sitz (47), der quer innerhalb der Schlepplenkstange (29) an dem zweiten Gelenk (28) jedes sekundären Beleuchtungsmoduls (6-8) vorgesehen ist, wobei der becherförmige durchgehende Sitz (47) mit dem Stift (43) an der Seite dessen ersten Endes (44) in Eingriff ist; eine Schraubenfeder (48), die auf dem Stift auf der Seite seines ersten Endes aufgesetzt und innerhalb des jeweiligen becherförmigen Sitzes (47) der Schlepplenkstange komprimiert zwischen einer Bodenwand (49) des becherförmigen durchgehenden Sitzes und dem zweiten Ende (45) des Stiftes angeordnet ist; und eine Mutter (50), die auf das erste Ende des Stiftes geschraubt ist und gegen die Schlepplenkstange (29) auf der Seite gegenüber dem jeweiligen becherförmigen durchgehenden Sitz (47) derselben einwirkt, um gegen die Wirkung der Schraubenfeder (48) an dem Stift (43) zu ziehen.

7. Beleuchtungsvorrichtung nach einem der vorangehenden Ansprüche, **dadurch gekennzeichnet, dass** die sekundären Beleuchtungsmodule (6-8) entweder einzeln oder alle zusammen von einem oder mehreren starren Basiselement(en) (51) getragen werden, an dem/denen jedes sekundäre Beleuchtungsmodul an der jeweiligen zweiten Achse (D-F) angelenkt ist; wobei das/die starre(n) Basiselement(e) (51) dafür konfiguriert ist/sind, eine Unterstützung für die erste Unterbaugruppe (18) bereitzustellen und eine Montageschnittstelle zwischen dem Gehäusekörper (2) und der ersten Unterbaugruppe (18) bereitzustellen.

8. Beleuchtungsvorrichtung nach einem der vorangehenden Ansprüche, **dadurch gekennzeichnet, dass** die ersten und zweiten motorisierten Stellglieder (19, 21b) jeweils einen Elektromotor umfassen, der eine Ausgangswelle (25, 26) aufweist, die relativ zu dem Gehäusekörper in einer Richtung parallel zu einer optischen Achse (OA) des Hauptbeleuchtungsmoduls (5) axial gleitet.

9. Fahrzeug mit einer Beleuchtungsvorrichtung (1) nach einem der vorangehenden Ansprüche.

## Revendications

1. Dispositif d'éclairage (1) pour des véhicules, comprenant un corps de boîtier (2) conçu pour être monté sur un véhicule et ayant une ouverture d'entrée avant (3) agencée pour être tournée en utilisation vers une direction de conduite vers l'avant du véhicule, un cache transparent (4) pour fermer l'ouverture d'entrée avant, un module d'éclairage principal (5) et au moins deux modules d'éclairage secondaires (6, 7, 8), le module d'éclairage principal et les au moins deux modules d'éclairage secondaires étant agencés à l'intérieur du corps de boîtier (2), côte à côte, tournés vers l'ouverture d'entrée, les au moins deux modules d'éclairage secondaires (6, 7, 8) étant portés au sein du corps de boîtier (2) en pouvant tourner par rapport au corps de boîtier et au module d'éclairage principal, autour de premiers axes (A, B, C) respectifs agencés parallèles les uns aux autres et transversaux à un plan horizontal ; et dans lequel les modules d'éclairage secondaires et le module d'éclairage principal sont contraints au corps de boîtier (2) de façon à pouvoir tourner par rapport au corps de boîtier autour de deuxièmes axes (D, E, F, G) agencés parallèles au plan horizontal ; dans lequel, en combinaison :
i) les modules d'éclairage secondaires (6 à 8) sont raccordés mécaniquement ensemble pour former au sein du corps de boîtier un premier sous-ensemble (18) comprenant un premier actionneur motorisé (19) configuré pour faire tourner tous les modules d'éclairage secondaires (6 à 8) ensemble autour des deuxièmes axes respectifs ;
ii) le module d'éclairage principal (5) est configuré pour former au sein du corps de boîtier un deuxième sous-ensemble (20) comprenant un deuxième actionneur motorisé (21b) configuré pour faire tourner le module d'éclairage principal autour de son deuxième axe respectif indépendamment du premier actionneur à moteur (19) et des modules d'éclairage secondaires (6 à 8) ; **caractérisé en ce que**
iii) les premier et deuxième sous-ensembles (18, 20) sont raccordés mécaniquement à un élément commun (21) mobile axialement par rapport au corps de boîtier (2) sous la poussée d'un premier dispositif de réglage manuel (22) prévu au sein du corps de boîtier et ayant un premier élément de commande (23) passant à travers le corps de boîtier pour dépasser à l'extérieur du corps de boîtier à l'opposé de l'ouverture d'entrée (3) ; le premier dispositif de réglage (22) étant configuré pour faire tourner selon le même angle les modules d'éclairage principal et secondaires (5 à 8), tous ensemble, autour des deuxièmes axes (D à G).

2. Dispositif d'éclairage selon la revendication 1, **caractérisé en ce que** le premier sous-ensemble (18) comprend un deuxième dispositif de réglage manuel (30) agencé au sein du corps de boîtier et ayant un deuxième élément de commande (31) de celui-ci tourné vers l'ouverture d'entrée avant (3), le deuxième dispositif de réglage manuel étant configuré pour déplacer axialement le premier actionneur motorisé (19) par rapport au corps de boîtier (2) pour amener les modules d'éclairage secondaires (6 à 8) à tourner tous ensemble autour des deuxièmes axes (D à F) respectifs par rapport au module d'éclairage principal (5) ; le deuxième dispositif de réglage manuel (30) étant contraint au moyen d'un joint à rotule (36) à l'élément commun (21) auquel les premier et deuxième sous-ensembles (18, 20) sont tous deux raccordés.

3. Dispositif d'éclairage selon la revendication 2, **caractérisé en ce que** le deuxième dispositif de réglage manuel (30) est constitué d'une tige filetée (34) s'engageant avec un siège fileté (33) prévu à travers un premier élément de support (32) portant le premier actionneur motorisé (19) ; la tige filetée (34) ayant une première extrémité portant le deuxième élément de commande (31) angulairement rigide par rapport à celui-ci et une deuxième extrémité (35) liée audit élément commun (21) auquel les premier et deuxième sous-ensembles (18, 20) sont tous deux raccordés via ledit joint à rotule (36), de façon à raccorder à l'élément commun (21) également le premier actionneur motorisé (19) via ledit premier élément de support (32).

4. Dispositif d'éclairage selon l'une quelconque des revendications précédentes, **caractérisé en ce que** le deuxième sous-ensemble (20) comprend un troisième dispositif de réglage manuel (37) prévu au sein du corps de boîtier et ayant un troisième élément de commande (38) passant à travers le corps de boîtier pour dépasser à l'extérieur du corps de boîtier (2) à l'opposé de l'ouverture d'entrée; le troisième dispositif de réglage manuel (37) étant configuré pour faire tourner le module d'éclairage principal (5) autour du deuxième axe (G) de celui-ci indépendamment des modules d'éclairage secondaires (6 à 8).

5. Dispositif d'éclairage selon l'une quelconque des revendications précédentes, **caractérisé en ce que** chaque module d'éclairage secondaire (6 à 8) comprend une première et une deuxième articulation (27, 28) ; la première articulation (27) étant agencée au niveau d'une extrémité inférieure (16) du module d'éclairage secondaire et définissant le deuxième axe respectif; et la deuxième articulation (28) étant agencée au niveau d'une extrémité supérieure (13) du module d'éclairage secondaire, parallèle à la première articulation (27) ; le premier sous-ensemble (18) comprenant en outre une bielle d'entraînement (29) pour raccorder ensemble tous les modules d'éclairage secondaires (6 à 8) ; la bielle d'entraînement (29) se présentant au-dessus de tous les modules d'éclairage secondaires et étant raccordée à la deuxième articulation (28) de tous les modules d'éclairage secondaires via un quatrième dispositif de réglage manuel (40) respectif configuré pour faire tourner le module secondaire respectif autour de son deuxième axe respectif par rapport à la bielle d'entraînement (29) et indépendamment des autres dispositifs d'éclairage secondaires; la bielle d'entraînement (29) étant raccordée axialement rigide au premier actionneur de moteur (19) pour être déplacée ainsi par rapport au corps de boîtier (2) et au module d'éclairage principal (5).

6. Dispositif d'éclairage selon la revendication 5, **caractérisé en ce que** chaque quatrième dispositif de réglage manuel (40) comprend : une broche (43) ayant une première extrémité filetée (44) et une deuxième extrémité (45) pourvue d'un tenon (46) lié en rotation à la deuxième articulation (28) d'un module d'éclairage secondaire respectif; un siège traversant en forme de cuvette (47) prévu transversalement au sein de la bielle d'entraînement (29) au niveau de la deuxième articulation (28) de chaque module d'éclairage secondaire (6 à 8), le siège traversant en forme de cuvette (47) étant engagé par ladite broche (43) sur le côté de sa première extrémité (44) ; un ressort hélicoïdal (48) ajusté sur la broche, sur le côté de sa première extrémité et agencé au sein du siège en forme de cuvette (47) respectif de la bielle d'entraînement, tassé entre une paroi de dessous (49) du siège traversant en forme de cuvette et la deuxième extrémité (45) de la broche ; et un écrou (50) vissé sur la première extrémité de ladite broche et coopérant contre la bielle d'entraînement (29) sur le côté opposé au siège traversant en forme de cuvette (47) respectif pour tirer la broche (43) contre l'action du ressort hélicoïdal (48).

7. Dispositif d'éclairage selon l'une quelconque des revendications précédentes, **caractérisé en ce que** les modules d'éclairage secondaires (6 à 8) sont portés, individuellement ou tous ensemble, par un ou plusieurs élément(s) de base rigide(s) (51) au(x)quel(s) chaque module d'éclairage secondaire est articulé au niveau du deuxième axe (D à F) respectif; le ou les élément(s) de base rigide(s) (51) étant configuré(s) pour fournir un support pour le premier sous-ensemble (18) et pour fournir une interface de montage entre le corps de boîtier (2) et le premier sous-ensemble (18).

8. Dispositif d'éclairage selon l'une quelconque des revendications précédentes, **caractérisé en ce que** lesdits premier et deuxième actionneurs motorisés (19, 21b) sont constitués d'un moteur électrique ayant un arbre de sortie (25, 26) coulissant axialement par rapport au corps de boîtier dans une direction parallèle à un axe optique (OA) du module d'éclairage principal (5).

9. Véhicule pourvu d'un dispositif d'éclairage (1) selon l'une quelconque des revendications précédentes.
